(19) Europäisches Patentamt
European Patent Office
Office européen des brevets

(11) **EP 4 769 866 A1**

(12) **EUROPEAN PATENT APPLICATION**

(43) Date of publication:
**01.07.2026   Bulletin 2026/27**

(21) Application number: **25223110.5**

(22) Date of filing: **12.12.2025**

(51) International Patent Classification (IPC):
**H02J 3/32** *(2026.01)*          **H02J 3/38** *(2026.01)*
**H02J 7/34** *(2006.01)*

(52) Cooperative Patent Classification (CPC):
**H02J 3/32; H02J 3/381; H02J 7/34;** H02J 2101/24

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH LA MA MD TN**

(30) Priority: **26.12.2024   CN 202411937115**

(71) Applicant: **Sigenergy Technology Co., Ltd.
Shanghai 201206 (CN)**

(72) Inventors:
• **YU, Ziwei
Shanghai, 201206 (CN)**
• **SUN, Jianwen
Shanghai, 201206 (CN)**

(74) Representative: **Crowell & Moring U.K. LLP
199 Bishopsgate
London EC2M 3TY (GB)**

(54) **CONTROL METHOD AND APPARATUS FOR POWER SUPPLY SYSTEM, AND POWER SUPPLY SYSTEM**

(57)    A control method and an apparatus for a power supply system, and a power supply system are provided. The control method includes: obtaining a current SOC and current charging/discharging power of the energy storage apparatus connected to the first power supply device; and executing a target control policy, in response to the current SOC exceeding a target SOC range, or the current charging/discharging power exceeding a target power range. The executing the target control policy includes: controlling a frequency of the first power supply device; or controlling a contactor connected to the second power supply device to be disconnected, to disconnect the second power supply device from the coupling point.

## Description

## FIELD

The present disclosure relates to the field of power supply technologies, and more particularly, to a control method and apparatus for a power supply system, and a power supply system.

## BACKGROUND

For new energy grid-connected projects that have been put into operation, a photovoltaic-storage system or an energy storage system can be added to the original devices to establish a micro grid, realizing maximum self-consumption of self-generated electricity. A plurality of power supply devices such as inverters in the micro grid may be from different manufacturers or of different models, leading to issues such as difficulty in rewiring and incompatible communication protocols, and posing difficulties for establishment of a communication network. Meanwhile, phenomena such as excess power generation and excessively large charging/discharging power may occur in the system, resulting in instability of system control.

How to achieve energy management of multiple power supply devices and ensure stable operation of the system without establishing communication has become an urgent technical problem to be solved in the field.

## SUMMARY

The present disclosure aims to solve at least one of the technical problems in the related art. To this end, the present disclosure provides a control method and an apparatus for a power supply system, and the power supply system. In this way, energy management of multiple power supply devices can be achieved without establishing communication, ensuring stable operation of the power supply system.

In a first aspect, the present disclosure provides a control method for a power supply system. The power supply system includes a first power supply device and a second power supply device, the first power supply device being connected to a first energy storage apparatus, and the first power supply device and the second power supply device being connected to a coupling point. The control method includes: obtaining a current State of Charge (SOC) and current charging/discharging power of the first energy storage apparatus connected to the first power supply device; and executing a target control policy, in response to the current SOC exceeding a target SOC range, or the current charging/discharging power exceeding a target power range. The executing the target control policy includes: controlling a frequency of the first power supply device; or controlling a contactor connected to the second power supply device to be disconnected, to disconnect the second power supply device from the coupling point.

With the control method for the power supply system according to the present disclosure, by performing real-time monitoring on the current SOC and the current charging/discharging power, and executing the target control policy in response to the current SOC or the current charging/discharging power exceeding a normal operating range, the energy management of the multiple power supply devices can be achieved without establishing the communication, ensuring the stable operation of the power supply system.

According to an embodiment of the present disclosure, the executing the target control policy in response to the current SOC exceeding the target SOC range includes: determining a frequency adjustment amount based on the current SOC; and adjusting the frequency of the first power supply device based on the frequency adjustment amount.

According to an embodiment of the present disclosure, the adjusting the frequency of the first power supply device based on the frequency adjustment amount includes: raising the frequency of the first power supply device based on the frequency adjustment amount in response to the current SOC being greater than an upper limit of the target SOC range, to cause the second power supply device to automatically operate in a derated mode. The second power supply device is configured to automatically stop operating in response to the frequency of the first power supply device exceeding an over-frequency protection threshold.

According to an embodiment of the present disclosure, the adjusting the frequency of the first power supply device based on the frequency adjustment amount includes: reducing the frequency of the first power supply device based on the frequency adjustment amount in response to the current SOC being smaller than a lower limit of the target SOC range, to cause the second power supply device to automatically increase output power. The second power supply device is configured to automatically stop operating in response to the frequency of the first power supply device being smaller than an under-frequency protection threshold.

According to an embodiment of the present disclosure, the frequency of the first power supply device is positively correlated to the current SOC.

According to an embodiment of the present disclosure, the executing the target control policy in response to the current SOC exceeding the target SOC range includes: controlling the contactor connected to the second power supply device to be disconnected, in response to the current SOC being greater than the upper limit of the target SOC range, the second power supply device being connected to a power generation apparatus.

According to an embodiment of the present disclosure, the executing the target control policy in response to the current SOC exceeding the target SOC range includes: controlling the contactor connected to the second power supply device to be disconnected in response to the current SOC being smaller than the lower limit of the target SOC range, the second power supply device being connected to a second energy storage apparatus.

According to an embodiment of the present disclosure, the executing the target control policy in response to the current charging/discharging power exceeding the target power range includes: controlling the contactor connected to the second power supply device to be disconnected, when the second power supply device is connected to the contactor and the second power supply device is allowed to be disconnected.

According to an embodiment of the present disclosure, the executing the target control policy in response to the current charging/discharging power exceeding the target power range includes: controlling the second power supply device to automatically stop operating in response to a voltage or a frequency of the coupling point being abnormal, when the second power supply device is not connected to the contactor, or when the second power supply device is not allowed to be disconnected.

According to an embodiment of the present disclosure, the method further includes, before executing the target control policy: obtaining a current coupling point parameter of the coupling point; and performing power control on the first power supply device by using the current coupling point parameter as a feedback value and a target coupling point parameter as a reference value.

In a second aspect, the present disclosure provides a control apparatus for a power supply system. The power supply system includes a first power supply device and a second power supply device, the first power supply device being connected to a first energy storage apparatus, and the first power supply device and the second power supply device being connected to a coupling point. The control apparatus includes: an obtaining module configured to obtain a current SOC and current charging/discharging power of the first energy storage apparatus connected to the first power supply device; and a processing module configured to execute a target control policy in response to the current SOC exceeding a target SOC range or the current charging/discharging power exceeding a target power range. The executing the target control policy includes: controlling a frequency of the first power supply device; or controlling a contactor connected to the second power supply device to be disconnected, to disconnect the second power supply device from the coupling point.

According to the control apparatus for the power supply system of the present disclosure, by performing the real-time monitoring on the current SOC and the current charging/discharging power, and executing the target control policy in response to the current SOC or the current charging/discharging power exceeding the normal operating range, the energy management of the multiple power supply devices can be achieved without establishing the communication, ensuring the stable operation of the power supply system.

In a third aspect, the present disclosure provides a power supply system. The power supply system includes: a first power supply device and a second power supply device, the first power supply device being connected to a first energy storage apparatus, and the first power supply device and the second power supply device being connected to a coupling point; and the control apparatus for the power supply system according to the above-described second aspect, the control apparatus being connected to a contactor, and the contactor being connected to the first power supply device and the second power supply device.

In a fourth aspect, the present disclosure provides an electronic device. The electronic device includes a memory, a processor, and a computer program stored in the memory and executable by the processor. The computer program, when executed by the processor, implements the control method for the power supply system according to the above-described first aspect.

In a fifth aspect, the present disclosure provides a non-transitory computer-readable storage medium. The non-transitory computer-readable storage medium has a computer program stored thereon. The computer program, when executed by a processor, implements the control method for the power supply system according to the above-described first aspect.

In a sixth aspect, the present disclosure provides a computer program product. The computer program product includes a computer program. The computer program, when executed by a processor, implements the control method for the power supply system according to the above-described first aspect.

Additional aspects and advantages of the present disclosure will be provided at least in part in the following description, or will become apparent at least in part from the following description, or can be learned from practicing of the present disclosure.

**BRIEF DESCRIPTION OF THE DRAWINGS**

The above and/or additional aspects and advantages of the present disclosure will become more apparent and more understandable from the following description of embodiments taken in conjunction with the accompanying drawings.

FIG. 1 is a schematic flowchart of a control method for a power supply system according to an embodiment of the present disclosure.
FIG. 2 is a schematic structural diagram of a power supply system according an embodiment of the present disclosure.
FIG. 3 is a schematic flowchart of a control method for a power supply system according to an embodiment of the present disclosure.

FIG. 4 is a schematic diagram showing a relationship between a SOC and a frequency of a power supply system according to an embodiment of the present disclosure.

FIG. 5 is a schematic diagram showing a relationship between a SOC and a contactor state of a power supply system according to an embodiment of the present disclosure.

FIG. 6 is a schematic diagram showing a relationship between a coupling point voltage and a contactor state of a power supply system according to an embodiment of the present disclosure.

FIG. 7 is a schematic diagram showing a relationship between a coupling point frequency and a contactor state of a power supply system according to an embodiment of the present disclosure.

FIG. 8 is a schematic structural diagram of a control apparatus for a power supply system according to an embodiment of the present disclosure.

FIG. 9 is a schematic structural diagram of an electronic device according to an embodiment of the present disclosure.

Reference numerals of the accompanying drawings:

first power supply device 210, second power supply device 220, first controller 310, second controller 320, master controller 400, first energy storage apparatus 510, power generation apparatus 520, load 600, obtaining module 810, processing module 820, electronic device 900, processor 901, memory 902.

**DETAILED DESCRIPTION OF THE EMBODIMENTS**

Technical solutions according to embodiments of the present disclosure will be described clearly and completely below in combination with accompanying drawings of the embodiments of the present disclosure. Obviously, the embodiments described below are only a part of the embodiments of the present disclosure, rather than all the embodiments of the present disclosure. On a basis of the embodiments of the present disclosure, all other embodiments obtained by those skilled in the art shall fall within the protection scope of the present disclosure.

It should be noted that terms "first" and "second" in the description and claims of the present disclosure are used to distinguish similar objects, rather than to describe a specific sequence or order. It should be understood that data as used can be interchanged where appropriate, to enable the embodiments of the present disclosure described herein to be implemented in an order other than that illustrated or described herein. Also, the objects distinguished by the terms such as "first" and "second" are usually objects of the same type. The quantity of the objects is not limited. For example, one or a plurality of first objects may be provided. In addition, "and/or" throughout the description and appended claims indicates at least one of the objects associated with "and/or". The character "/" generally indicates that the associated objects before and after the character are in an "or" relationship.

A control method for a power supply system, a control apparatus for a power supply system, a power supply system, an electronic device, and a readable storage medium according to the embodiments of the present disclosure will be described in detail below through specific embodiments and application scenarios thereof in conjunction with the accompanying drawings.

The power supply system according to an embodiment of the present disclosure may include a first power supply device 210 and a second power supply device 220. The first power supply device 210 is connected to a first energy storage apparatus 510. The first power supply device 210 and the second power supply device 220 are connected to a coupling point.

The first power supply device 210 and the second power supply device 220 are two types of power supply devices.

The power supply device is configured to achieve power conversion between a direct-current voltage and an alternative-current voltage. The power supply device may be an inverter, a converter, etc.

It should be understood that the power supply system may include a plurality of first power supply devices 210, and the power supply system may include a plurality of second power supply devices 220, with the power supply system supporting multiple units operating in parallel.

The first power supply device 210 and the second power supply device 220 are connected to the coupling point, which is a power aggregation point in the power supply system. The coupling point may be connected to a load 600, to supply power from the power supply system to the load 600. The coupling point may be connected to a power grid, to feed power from the power supply system to the power grid.

The first power supply device 210 is connected to the first energy storage apparatus 510. The first power supply device 210 may absorb electric energy through the coupling point, and may also output electric energy through the coupling point.

According an embodiment of the present disclosure, an executor of the control method for the power supply system may be an electronic device or a functional module or functional entity in an electronic device that can implement the control method for the power supply system.

It should be noted that no communication connection is established between the first power supply device 210 and the second power supply device 220. The first power supply device 210 is a controllable power supply device, and the second power supply device 220 is an uncontrollable power supply device.

In an embodiment, the second power supply device 220 may be connected to a power generation apparatus 520. In an embodiment, the second power supply device 220 may be connected to a second energy storage apparatus. In an embodiment, the second power supply device 220 may be connected to the power generation apparatus 520 and the second energy storage apparatus.

For example, the second power supply device 220 may be a photovoltaic inverter, an energy storage inverter, or a photovoltaic-storage inverter.

It should be understood that when the uncontrollable second power supply device 220 is connected to the power supply system, issues such as excess power generation or excessively large charging/-discharging power may arise, leading to instability of the system.

The control method for the power supply system according to the embodiments of the present disclosure can achieve energy management of multiple power supply devices without establishing communication, ensuring stable operation of the power supply system.

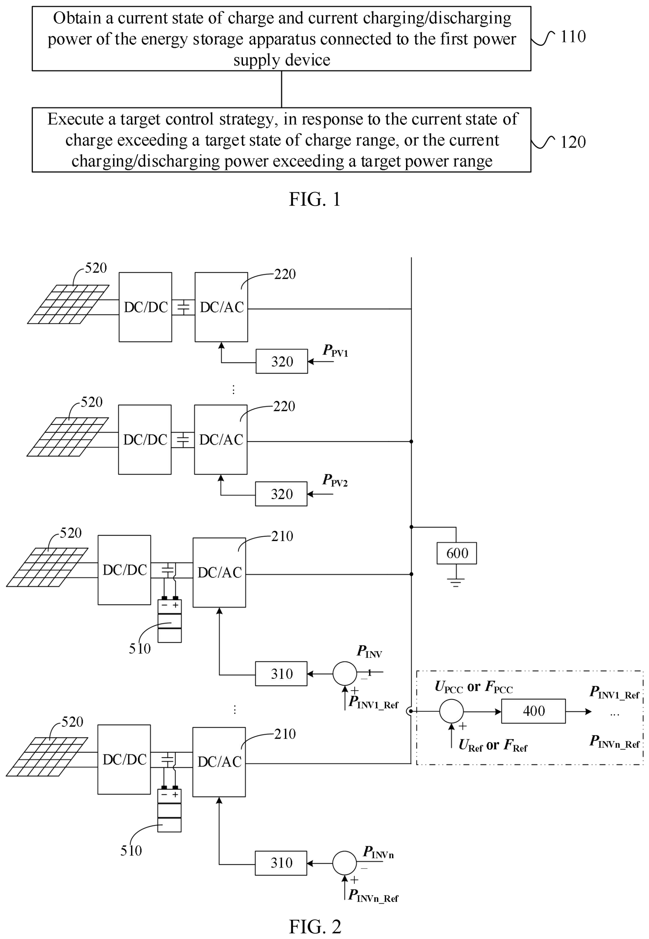

As illustrated in FIG. 1, the control method for the power supply system includes following steps 110 and 120.

At step 110, a current SOC and current charging/discharging power of the first energy storage apparatus 510 connected to the first power supply device 210 are obtained.

It should be understood that, the current SOC of the first energy storage apparatus 510 connected to the first power supply device 210 may reflect absorption capacity or output capacity of the first power supply device 210. The current charging/discharging power corresponding to the first power supply device 210 may reflect an operating state of the first power supply device 210. By combining the absorption capacity, the output capacity, and the operating state of the controllable first power supply device 210, operation stability of the power supply system can be determined.

In this step, the current SOC of the first energy storage apparatus 510 connected to the first power supply device 210 and the current charging/discharging power corresponding to the first power supply device 210 are obtained in real time. Based on the current SOC and the current charging/discharging power, it is determined whether the power supply system has an instability tendency or instability has occurred.

It should be understood that, when the power supply system includes the plurality of first power supply devices 210 operating in parallel, the current SOC is determined based on the SOC of the first energy storage apparatuses 510 connected to the plurality of first power supply devices 210, and the current charging/discharging power is determined based on charging/discharging power of the plurality of first power supply devices 210.

It should be noted that the current charging/-discharging power corresponding to the first power supply device 210 may be characterized by a voltage or a frequency of the coupling point. If the current charging/-

discharging power changes, the voltage or the frequency of the coupling point changes accordingly. The current charging/discharging power corresponding to the first power supply device 210 may be monitored in real time by obtaining the voltage or the frequency of the coupling point in real time.

At step 120, a target control policy is executed in response to the current SOC exceeding a target SOC range, or the current charging/discharging power exceeding a target power range.

The target SOC range is a predetermined SOC range of the first energy storage apparatus 510 during normal operation, and the target power range is a predetermined charging/discharging power range of the first power supply device 210 during the normal operation.

In actual implementation, values of the target SOC range and the target power range may be adjusted based on actual operation requirements.

In this step, in response to the current SOC exceeding the target SOC range, or the current charging/discharging power exceeding the target power range, it is determined that the power supply system is at risk of losing control, and the target control policy is executed.

It should be understood that, the current charging/discharging power exceeding the target power range may be manifested as the voltage of the coupling point exceeding a target voltage range during the normal operation, or as the frequency of the coupling point exceeding a target frequency range during the normal operation.

It should be noted that, the current SOC and the current charging/discharging power are monitored in real time. When at least one of the current SOC and the current charging/discharging power exceeds a corresponding normal operation range, the target control policy is executed.

Executing the target control policy includes: controlling a frequency of the first power supply device 210; or controlling a contactor connected to the second power supply device 220 to be disconnected, to disconnect the second power supply device 220 from the coupling point.

In this embodiment, by controlling the frequency of the first power supply device 210 or controlling connection or disconnection of the contactor connected to second power supply device 220, the energy management of the multiple power supply devices can be achieved, improving the operation stability of the power supply system.

It should be understood that the first power supply device 210 and the second power supply device 220 are connected to the coupling point. By controlling the frequency of the first power supply device 210, when the frequency of the first power supply device 210 changes, the voltage or the frequency of the coupling point changes accordingly. For the second power supply device 220, the second power supply device 220 can monitor the voltage or the frequency of the coupling point and perform active protection actions based on the voltage or the frequency of the coupling point.

For example, when electric energy of the power supply system is sufficient, and the current SOC of the first energy storage apparatus 510 connected to the first power supply device 210 is greater than an upper limit of the target SOC range, it is indicated that the SOC of the first energy storage apparatus 510 connected to the first power supply device 210 is close to a charging threshold, and the first power supply device 210 cannot absorb excess power output by the second power supply device 220.

In this embodiment, the frequency of the first power supply device 210 is controlled to be raised. When the second power supply device 220 monitors that the voltage or the frequency of the coupling point changes, the second power supply device 220 actively performs over-frequency derating. In this way, the excess power output by the second power supply device 220 is prevented from causing the coupling point to lose control, and the energy management of the multiple power supply devices is achieved, improving the operation stability of the power supply system.

It should be understood that, the second power supply device 220 is configured to operate based on its self-set control policy. In the embodiments of the present disclosure, the action of the second power supply device 220 is not directly controlled. That is, the second power supply device 220 is uncontrollable. The second power supply device 220 may monitor the voltage or the frequency of the coupling point in real time, and adjust its own output state to achieve its own safety protection function.

It should be noted that the contactor connected to the second power supply device 220 is a switching device that controls an electrical connection between the second power supply device 220 and the coupling point. When the contactor connected to the second power supply device 220 is opened, the second power supply device 220 is electrically disconnected from the coupling point. When the contactor connected to the second power supply device 220 is closed, the second power supply device 220 is electrically connected to the coupling point is connected.

For example, when the electric energy of the power supply system is sufficient, and the current SOC of the first energy storage apparatus 510 connected to the first power supply device 210 is greater than the upper limit of the target SOC range, it is indicated that the SOC of the first energy storage apparatus 510 connected to the first power supply device 210 is close to the charging threshold, and the first power supply device 210 cannot absorb the excess power output by the second power supply device 220.

In this embodiment, by controlling the contactor connected to the second power supply device 220 to be disconnected, the excess power output by the second power supply device 220 is prevented from causing the coupling point to lose control, and the energy management of the multiple power supply devices is achieved, improving the operation stability of the power supply system.

It should be understood that, when the electric energy of the power supply system is insufficient or an output of the second power supply device 220 is abnormal, the energy management of the multiple power supply devices can also be achieved by controlling the frequency of the first power supply device 210 or by controlling the contactor connected to the second power supply device 220 to be disconnected, improving the operation stability of the power supply system.

In an embodiment of the present disclosure, by performing real-time monitoring on the current SOC and the current charging/discharging power, executing the target control policy in response to the current SOC or the current charging/discharging power exceeding a normal operating range, and controlling the frequency of the first power supply device 210 and connection or disconnection of the contactor connected to the second power supply device 220, the energy management of the multiple power supply devices can be achieved. In this way, the uncontrolled second power supply device 220 can be prevented from causing the instability of the system, effectively enhancing the operation stability of the power supply system.

With the control method for the power supply system according to the embodiments of the present disclosure, by performing the real-time monitoring on the current SOC and the current charging/discharging power, and executing the target control policy in response to the current SOC or the current charging/-discharging power exceeding the normal operating range, the energy management of the multiple power supply devices can be achieved without establishing the communication, ensuring the stable operation of the power supply system.

The embodiments of the present disclosure are described in detail below from two different implementation aspects.

In a first aspects, frequency adjustment control is performed.

In some embodiments, step 120 of executing the target control policy in response to the current SOC exceeding the target SOC range may include: determining a frequency adjustment amount based on the current SOC; and adjusting the frequency of the first power supply device based on the frequency adjustment amount.

It should be understood that, when the first power supply device 210 operates normally, the frequency of the first power supply device 210 is maintained at a certain value or within a certain range. The frequency adjustment amount represents a variation amount for adjusting the frequency of the first power supply device 210 during normal operation, which is determined based on the current SOC.

In this embodiment, a corresponding frequency adjustment amount may be calculated based on the current SOC, and the frequency of the first power supply device 210 may be adjusted based on the frequency adjustment amount corresponding to the current SOC.

For example, the frequency of the first power supply device 210 is controlled based on the following equation:

$$freq = f_0 + \Delta f,$$

where *freq* represents a frequency controlling operation of the first power supply device 210, $f_0$ represents a normal operating frequency of the first power supply device 210, and $\Delta f$ represents the frequency adjustment amount.

In this embodiment, $\Delta f = f_a(soc)$, where *soc* represents the current SOC, and $f_a(soc)$ represents a functional relationship between the current SOC and the frequency adjustment amount.

In some embodiments, adjusting the frequency of the first power supply device 210 based on the frequency adjustment amount may include: raising the frequency of the first power supply device 210 based on the frequency adjustment amount in response to the current SOC being greater than the upper limit of the target SOC range, to cause the second power supply device 220 to automatically operate in a derated mode.

The second power supply device 220 is configured to automatically stop operating in response to the frequency of the first power supply device 210 exceeding an over-frequency protection threshold.

In this embodiment, when the current SOC is greater than the upper limit of the target SOC range, it is indicated that the current SOC exceeds the target SOC range, and the first energy storage apparatus 510 connected to the first power supply device 210 contains a large amount of electric energy. The first power supply device 210 cannot absorb more electric energy. At this time, the frequency of the first power supply device 210 is controlled to be raised, and the voltage or the frequency of the coupling point changes accordingly, which may manifest as over-frequency at the coupling point. Upon detecting the change at the coupling point, the second power supply device 220 actively operates in an over-frequency derated mode.

It should be understood that, by raising the frequency of the first power supply device 210 to cause the second power supply device 220 to automatically operate in the derated mode, the electric energy actively output from the second power supply device 220 to the coupling point is reduced, effectively improving the operation stability of the power supply system.

In this embodiment, if the current SOC is further increased, the frequency of the first power supply device 210 is further raised.

In actual implementation, when the frequency of the first power supply device 210 exceeds the over-frequency protection threshold, the second power supply device 220 detects that the frequency of the coupling point reaches its own over-frequency protection point, and automatically stops operating to achieve protective shutdown, preventing the instability of the system caused by excess electric energy of the second power supply device 220.

The over-frequency protection threshold is a predetermined frequency threshold, which may be determined based on an over-frequency protection point of the second power supply device 220.

In some embodiments, adjusting the frequency of the first power supply device based on the frequency adjustment amount may include: reducing the frequency of the first power supply device 210 based on the frequency adjustment amount in response to the current SOC being smaller than a lower limit of the target SOC range, to cause the second power supply device 220 to automatically increase output power.

The second power supply device 220 is configured to automatically stop operating in response to the frequency of the first power supply device 210 being smaller than an under-frequency protection threshold.

In this embodiment, when the current SOC is smaller than the lower limit of the target SOC range, it is indicated that the current SOC exceeds the target SOC range, and the first energy storage apparatus 510 connected to the first power supply device 210 contains little electric energy. At this time, the frequency of the first power supply device 210 is controlled to be reduced, and the voltage or the frequency of the coupling point changes accordingly, which may manifest as under-frequency at the coupling point. Upon detecting the change at the coupling point, the second power supply device 220 is actively operate in an under-frequency power-raising mode. In this way, energy management between the two types of power supply devices in the power supply system is achieved, improving the operation stability.

It should be understood that, by reducing the frequency of the first power supply device 210, the second power supply device 220 automatically operate in the power-raising mode. The electric energy actively output from the second power supply device 220 to the coupling point is increased. The first power supply device 210 absorbs electric energy of the coupling point. In this way, energy storage stability is improved, and the operation stability of the power supply system is effectively improved.

In this embodiment, if the current SOC is further decreased, the frequency of the first power supply device 210 is further reduced.

In actual implementation, when the frequency of the first power supply device 210 is smaller than the under-frequency protection threshold, the second power supply device 220 detects that the frequency of the coupling point reaches its own under-frequency protection point, and automatically stops operating to achieve the protective shutdown, preventing excessively large charging/discharging power at the coupling point from getting out of control, and enhancing the operation stability of the power supply system.

The under-frequency protection threshold is a predetermined frequency threshold, which can be determined based on an under-frequency protection point of the second power supply device 220.

In some embodiments, the frequency of the first power supply device 210 is positively correlated to the current SOC.

In this embodiment, the frequency of the first power supply device 210 is adjusted in response to the current SOC exceeding the target SOC range. A greater current SOC corresponds to a greater frequency of the first power supply device 210, and a smaller current SOC corresponds to a smaller frequency of the first power supply device 210.

It should be noted that, the current SOC is within the target SOC range, and the frequency of the first power supply device 210 is maintained at a certain value or within a certain range.

When the current SOC exceeds the target SOC range, the frequency of the first power supply device 210 changes in a positive correlation with the current SOC. By adjusting the frequency of the first power supply device 210, the second power supply device 220 automatically operates in the derated and power-raising mode. When stable operation cannot be achieved through the derated and power-raising mode, the frequency of the first power supply device 210 may be raised to the over-frequency protection threshold or reduced to the under-frequency protection threshold as the current SOC changes, causing the second power supply device 220 to automatically shut down for protection.

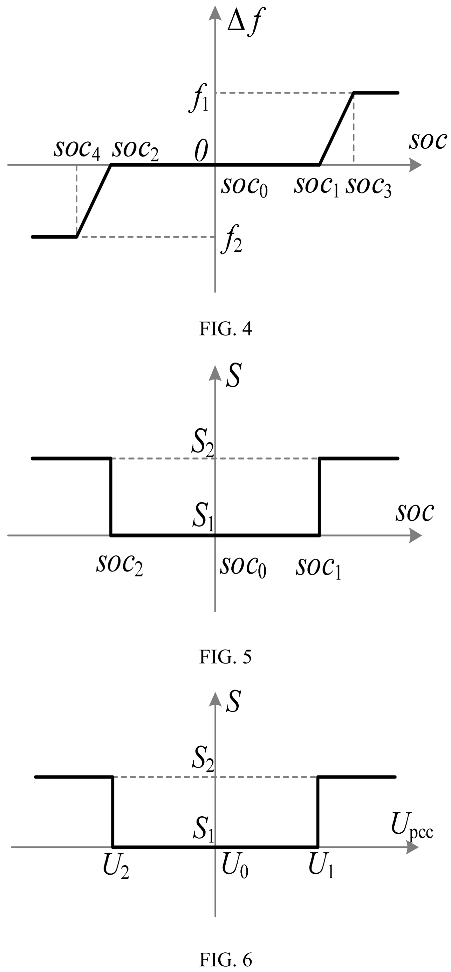

According to an embodiment, for example, as illustrated in FIG. 4, $soc_0$ represents a SOC median of the first energy storage apparatus 510 connected to the first power supply device 210, and $soc_0$ may be set to 50%; $soc_1$ represents the upper limit of the target SOC range; and $soc_2$ represents the lower limit of the target SOC range.

$soc_1$ may be equal to a charging threshold of the system, and $soc_2$ may be equal to a discharging threshold of the system. The charging threshold and the discharging threshold are related to charging/discharging cut-off SOC of the first energy storage apparatus 510.

In this embodiment, $soc_3$ represents a charging cut-off value of the system, and $soc_4$ represents a discharging cut-off value of the system. $f_1$ and $f_2$ represent a frequency adjustment range of the first power supply device 210. The frequency adjustment range is related to a predetermined over/under-frequency threshold of the power generation apparatus 520.

In response to the current SOC exceeding the target SOC range, the operating frequency of the first power supply device 210 is controlled based on an equation $freq = f_0 + \Delta f$. The frequency of the first power supply device 210 is positively correlated to the current SOC. As the current SOC is increased, the frequency of the first power supply device 210 is increased accordingly. As the current SOC is decreased, the frequency of the first power supply device 210 is decreased accordingly.

When the current SOC is greater than the upper limit $soc_1$ of the target SOC range, the frequency of the first power supply device 210 is controlled to be raised, and the second power supply device 220 actively operate in the over-frequency derated mode. When the current SOC is further increased, which causes the frequency of the first power supply device 210 to reach the over-frequency protection threshold $f_1$, the second power supply device 220 actively shut down for protection. In this way, the coupling point is prevented from getting out of control due to excess power of the second power supply device 220.

When the current SOC is smaller than the lower limit $soc_2$ of the target SOC range, the frequency of the first power supply device 210 is controlled to be reduced, and the second power supply device 220 actively operate in the under-frequency power-raising mode. When the current SOC is further reduced, which causes the frequency of the first power supply device 210 to reach the under-frequency protection threshold $f_2$, the second power supply device 220 actively shut down for protection. In this way, instability caused by the excessively large charging power at the coupling point is avoided.

In a second aspect, contactor control is performed.

In some embodiments, executing the target control policy in response to the current SOC exceeding the target SOC range includes: controlling the contactor connected to the second power supply device 220 to be disconnected, in response to the current SOC being greater than the upper limit of the target SOC range, the second power supply device 220 being connected to the power generation apparatus 520.

In this embodiment, when the current SOC is greater than the upper limit of the target SOC range, it is indicated that the first energy storage apparatus 510 connected to the first power supply device 210 contains a large amount of electric energy. The first power supply device 210 cannot absorb more electric energy. At this time, the contactor connected to the second power supply device 220 is controlled to be disconnected, the second power supply device 220 being connected to the power generation apparatus 520. In this way, the electric energy actively output from the second power supply device 220 to the coupling point is reduced, effectively improving the operation stability of the power supply system.

In some embodiments, executing the target control policy in response to the current SOC exceeding the target SOC range includes: controlling the contactor connected to the second power supply device 220 to be disconnected in response to the current SOC being smaller than the lower limit of the target SOC range, the second power supply device 220 being connected to a second energy storage apparatus.

In this embodiment, when the current SOC is smaller than the lower limit of the target SOC range, it is indicated that the first energy storage apparatus 510 connected to the first power supply device 210 contains little electric energy, which may lead to a situation where the charging/discharging power is excessively large. At this time, the contactor connected to the second power supply device 220 is controlled to be disconnected, the second power supply device 220 being connected to a second energy storage apparatus. In this way, the first power supply device 210 is prevented from excessively absorbing the electric energy of the second power supply device 220, protecting the second energy storage apparatus connected to the second power supply device 220, and enhancing the operation stability of the power supply system.

According to an embodiment, as illustrated in FIG. 5, $soc_0$ represents a SOC median of the first energy storage apparatus 510 connected to the first power supply device 210, and $soc_0$ may be set to 50%; $soc_1$ represents the upper limit of the target SOC range; and $soc_2$ represents the lower limit of the target SOC range.

$soc_1$ may be equal to a charging threshold of the system, and $soc_2$ may be equal to a discharging threshold of the system. The charging threshold and the discharging threshold are related to charging and discharging cut-off SOC of the first energy storage apparatus 510, respectively.

In this embodiment, $S$ represents a contactor state, $S_1$ represents the contactor being connected, and $S_2$ represents the contactor being disconnected.

When the current SOC is greater than the upper limit $soc_1$ of the target SOC range, the contactor connected to the second power supply device 220 is controlled to be disconnected, the second power supply device 220 being connected to the power generation apparatus 520. When the current SOC is smaller than the lower limit $soc_2$ of the target SOC range, the contactor connected to the second power supply device 220 is controlled to be disconnected, the second power supply device 220 being connected to the second energy storage apparatus. In this way, unstable operation of the controllable first power supply device 210 caused by the SOC of the first power supply device 210 reaching a threshold is prevented.

In some embodiments, executing the target control policy in response to the current charging/discharging power exceeding the target power range includes: controlling the contactor connected to the second power supply device 220 to be disconnected, when the second power supply device 220 is connected to the contactor and the second power supply device 220 is allowed to be disconnected.

In some embodiments, executing the target control policy in response to the current charging/discharging power exceeding the target power range includes: controlling the second power supply device 220 to automatically stop operating in response to the voltage or the frequency of the coupling point being abnormal, when the second power supply device 220 is not connected to the contactor, or when the second power supply device 220 is not allowed to be disconnected.

It should be noted that, when the current charging/discharging power exceeds the target power range, the voltage or the frequency of the coupling point may become abnormal due to inability to absorb or satisfy power requirements.

When the second power supply device 220 is connected to the contactor and the second power supply device 220 is allowed to be disconnected, the contactor connected to the second power supply device 220 is controlled to be disconnected.

When the second power supply device 220 is not connected to the contactor or the second power supply device 220 is not allowed to be disconnected, in response to the voltage or the frequency of the coupling point being abnormal, the second power supply device 220 actively perform protection against the abnormal voltage or the abnormal frequency, and restrain the output of the second power supply device 220.

In actual implementation, when the frequency of the coupling point reaches the under-frequency protection point or the over-frequency protection point, the second power supply device 220 can automatically stop operating, and when the voltage of the coupling point reaches an under-voltage protection point or an over-voltage protection point, the second power supply device 220 can also automatically stop operating, to prevent the instability caused by the excessively large charging power at the coupling point.

According to an embodiment, the current charging/discharging power corresponding to the first power supply device 210 is characterized by a voltage $U$pcc and a frequency $F$pcc of the coupling point.

As illustrated in FIG. 6, $S$ represents the contactor state, $S_1$ represents the contactor being connected, and $S_2$ represents the contactor being disconnected.

When the current charging/discharging power is greater than an upper limit of the target power range, $U$pcc is greater than an over-voltage protection point $U_1$, and the contactor connected to the second power supply device 220 is controlled to be disconnected.

When the current charging/discharging power is smaller than the lower limit of the target power range, $U$pcc is smaller than an under-voltage protection point $U_2$, and the contactor connected to the second power supply device 220 is controlled to be disconnected.

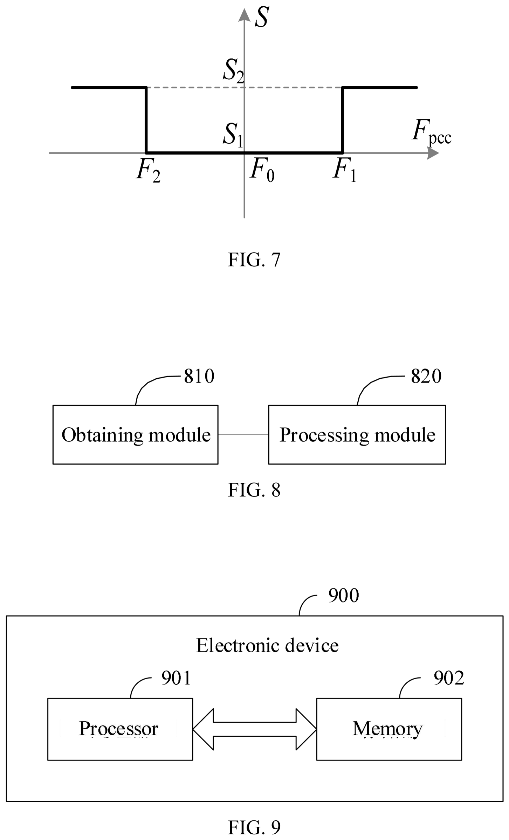

As illustrated in FIG. 7, $S$ represents the contactor state, $S_1$ represents the contactor being connected, and $S_2$ represents the contactor being disconnected.

When the current charging/discharging power is greater than the upper limit of the target power range, $F$pcc is greater than an over-frequency protection point $F_1$, and the contactor connected to the second power supply device 220 is controlled to be disconnected.

When the current charging/discharging power is smaller than the lower limit of the target power range, $F$pcc is smaller than an under-frequency protection point $F_2$, and the contactor connected to the second power supply device 220 is controlled to be disconnected.

In some embodiments, the control method for the power supply system further includes, before executing the target control policy: obtaining a current coupling point parameter of the coupling point; and performing power control on the first power supply device 210 by using the current coupling point parameter as a feedback value and a target coupling point parameter as a reference value.

In this embodiment, the current coupling point parameter of the coupling point is obtained in real time, and a predetermined target coupling point parameter is used as the reference value to perform closed-loop power control on the first power supply device 210, achieving maximum self-consumption of the system.

The coupling point parameter may be the voltage of the coupling point or the frequency of the coupling point.

For example, a current voltage of the coupling point is obtained in real time, and a predetermined target coupling point voltage is used as the reference value to perform the closed-loop power control on the first power supply device 210.

For another example, a current frequency of the coupling point is obtained in real time, and a predetermined target coupling point frequency is used as the reference value to perform the closed-loop power control on the first power supply device 210.

When the second power supply device 220 outputs the excess electric energy to the coupling point on the basis of meeting power requirements of the second power supply device 220, based on the law of conservation of energy, the voltage of the coupling point will rise accordingly. By performing the closed-loop power control using the target coupling point parameter as the reference value, the first power supply device 210 can absorb the excess electric energy of the second power supply device 220. In this way, the energy management of the multiple power supply devices can be achieved without establishing communication with the second power supply device 220, and the second power supply device 220 is also allowed to participate in energy dispatch of the power supply system.

In an embodiment of the present disclosure, parameters such as the current SOC, the voltage of the coupling point, and the frequency of the coupling point (where the voltage or the frequency of the coupling point may reflect the current charging/discharging power) are monitored, and electric energy management of multiple power supply devices in the power supply system is achieved through a primary control policy (the closed-loop control) and a secondary control policy ( the target control policy).

The primary control policy can realize energy dispatch of the second power supply device 220 and maximum utilization of generated power, while the secondary control policy can avoid the instability of the power supply system caused by the uncontrolled second power supply device 220.

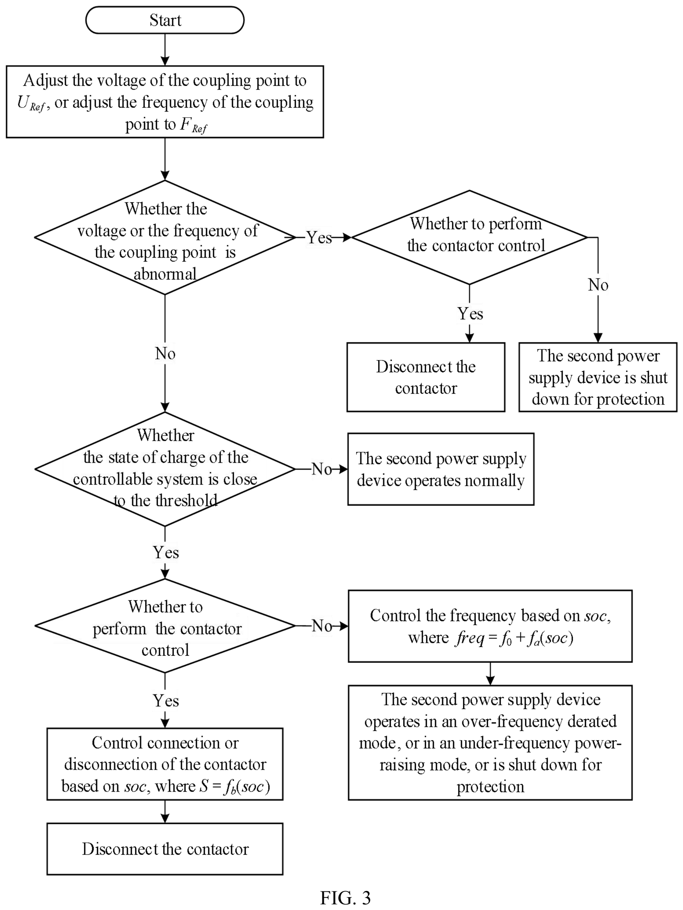

According to an embodiment, as illustrated in FIG. 3, a target coupling point voltage $U_{Ref}$ or a target coupling point frequency $F_{Ref}$ is used as the reference value, and the voltage of the coupling point is adjusted to $U_{Ref}$ or the frequency of the coupling point is adjusted to $F_{Ref}$.

Whether the voltage or the frequency of the coupling point is abnormal is monitored, that is, the current charging/discharging power is obtained for determination. In response to the voltage or the frequency being abnormal (that is, the current charging/discharging power exceeds the target power range): when the contactor control is adopted, the contactor connected to the second power supply device 220 is controlled to be disconnected; and when the contactor control is not adopted, the second power supply device 220 is actively shut down for protection.

Whether the SOC of the controllable system (the first energy storage apparatus 510 connected to the first power supply device 210) is close to a threshold is monitored. When the SOC of the controllable system is not close to the threshold, it is indicated that the current SOC is within the target SOC range, and the second power supply device 220 operates normally based on its own control policy.

When the SOC of the controllable system is close to the threshold, it is indicated that the current SOC exceeds the target SOC range. When the contactor control is adopted, the contactor is controlled to be connected or disconnected based on the current SOC $soc$, where $S=f_b(soc)$ indicates a relationship between the connection or disconnection of the contactor and $soc$.

In actual implementation, when the current SOC is greater than the upper limit $soc_1$ of the target SOC range, the contactor connected to the second power supply device 220 is controlled to be disconnected, the second power supply device 220 being connected to the power generation apparatus 520. When the current SOC is smaller than the lower limit $soc_2$ of the target SOC range, the contactor connected to the second power supply device 220 is controlled to be disconnected, the second power supply device 220 being connected to the second energy storage apparatus.

In an embodiment, when the current SOC exceeds the target SOC range, the frequency may be controlled based on the current SOC $soc$, where $freq = f_0 + \Delta f = f_0 + f_a(soc)$ indicates a relationship between the frequency and *soc.*

When the current SOC is greater than the upper limit $soc_1$ of the target SOC range, the frequency of the first power supply device 210 is controlled to be raised, and the second power supply device 220 actively operates in the over-frequency derated mode. When the current SOC is further increased, which causes the frequency of the first power supply device 210 to reach the over-frequency protection threshold $f_1$, the second power supply device 220 actively shuts down for protection.

When the current SOC is smaller than the lower limit $soc_2$ of the target SOC range, the frequency of the first power supply device 210 is controlled to be reduced, and the second power supply device 220 actively operates in the under-frequency power-raising mode. When the current SOC is further reduced, which causes the frequency of the first power supply device 210 to reach the under-frequency protection threshold $f_2$, the second power supply device 220 actively shuts down for protection.

In this embodiment, by monitoring the parameters such as the current SOC, the voltage of the coupling point, and the frequency of the coupling point, and executing the primary control policy and the secondary control policy, the energy management of the multiple power supply devices is achieved. In this way, while achieving the energy dispatch of the second power supply device 220 and maximizing the utilization of generated power, the instability of the power supply system caused by the uncontrolled second power supply device 220 can be avoided, effectively improving the operation stability of the power supply system.

It should be noted that, when the controllable first power supply device 210 reaches its maximum absorption capacity, that is, when the current SOC is excessively high or the charging power reaches the threshold, the excess electric energy of the second power supply device 220 cannot be effectively absorbed. In this case, the secondary control policy is adopted to prevent the instability of the power supply system caused by the uncontrolled second power supply device 220.

In addition, when the current SOC is excessively low or the discharging power reaches the threshold, the secondary control policy is adopted to coordinate the output of the second power supply device 220. In this way, the second power supply device 220 is prevented from causing a voltage or a frequency of the system to be abnormal or further reducing of the SOC.

The control method for the power supply system according to the embodiments of the present disclosure is executable by a control apparatus for the power supply system. In an embodiment of the present disclosure, the control apparatus for the power supply system executing the control method for the power supply system is taken as an example, to describe the control apparatus for the power supply system according to the embodiments of the present disclosure.

In an embodiment of the present disclosure, a control apparatus for the power supply system is further provided. The power supply system includes the first power supply device 210 and the second power supply device 220. The first power supply device 210 is connected to the first energy storage apparatus 510. The first power supply device 210 and the second power supply device 220 are connected to the coupling point.

As illustrated in FIG. 8, the control apparatus for the power supply system includes: an obtaining module 810 configured to obtain a current SOC and current charging/discharging power of the first energy storage apparatus 510 connected to the first power supply device 210; and a processing module 820 configured to execute a target control policy in response to the current SOC exceeding a target SOC range or the current charging/discharging power exceeding a target power range. Executing the target control policy includes: controlling a frequency of the first power supply device 210; or controlling a contactor connected to the second power supply device 220 to be disconnected, to disconnect the second power supply device 220 from the coupling point.

With the control apparatus for the power supply system according to the embodiments of the present disclosure, by performing the real-time monitoring on the current SOC and the current charging/discharging power, and executing the target control policy in response to the current SOC or the current charging/discharging power exceeding the normal operating range, the energy management of the multiple power supply devices can be achieved without establishing the communication, ensuring the stable operation of the power supply system.

In some embodiments, the processing module 820 being configured to execute the target control policy in response to the current SOC exceeding the target SOC range includes: the processing module 820 being configured to determine a frequency adjustment amount based on the current SOC; and adjust the frequency of the first power supply device 210 based on the frequency adjustment amount.

In some embodiments, the processing module 820 being configured to adjust the frequency of the first power supply device 210 based on the frequency adjustment amount includes: the processing module 820 being configured to raise the frequency of the first power supply device 210 based on the frequency adjustment amount in response to the current SOC being greater than an upper limit of the target SOC range, to cause the second power supply device 220 to automatically operate in a derated mode. The second power supply device 220 is configured to automatically stop operating in response to the frequency of the first power supply device 210 exceeding an over-frequency protection threshold.

In some embodiments, the processing module 820 being configured to adjust the frequency of the first power supply device 210 based on the frequency adjustment amount includes: the processing module 820 being configured to reduce the frequency of the first power supply device 210 based on the frequency adjustment amount in response to the current SOC being smaller than a lower limit of the target SOC range, to cause the second power supply device 220 to automatically increase output power. The second power supply device 220 is configured to automatically stop operating in response to the frequency of the first power supply device 210 being smaller than an under-frequency protection threshold.

In some embodiments, the frequency of the first power supply device 210 is positively correlated to the current SOC.

In some embodiments, the processing module 820 being configured to execute the target control policy in response to the current SOC exceeding the target SOC range includes: the processing module 820 being configured to control the contactor connected to the second power supply device 220 to be disconnected, in response to the current SOC being greater than the upper limit of the target SOC range, the second power supply device 220 being connected to the power generation apparatus 520.

In some embodiments, the processing module 820 being configured to execute the target control policy in response to the current SOC exceeding the target SOC range includes the processing module 820 being configured to: control the contactor connected to the second power supply device 220 to be disconnected in response to the current SOC being smaller than the lower limit of the target SOC range, the second power supply device 220 being connected to the second energy storage apparatus.

In some embodiments, the processing module 820 being configured to execute the target control policy in response to the current charging/discharging power exceeding the target power range includes the processing module 820 being configured to: control the contactor connected to the second power supply device 220 to be disconnected, when the second power supply device 220 is connected to the contactor and the second power supply device 220 is allowed to be disconnected.

In some embodiments, the processing module 820 being configured to execute the target control policy in response to the current charging/discharging power exceeding the target power range includes the processing module 820 being configured to: control the second power supply device 220 to automatically stop operating in response to a voltage or a frequency of the coupling point being abnormal, when the second power supply device 220 is not connected to the contactor, or when the second power supply device 220 is not allowed to be disconnected.

In some embodiments, the processing module 820 is further configured to obtain a current coupling point parameter of the coupling point; and perform power control on the first power supply device 210 by using the current coupling point parameter as a feedback value and a target coupling point parameter as a reference value.

The control apparatus for the power supply system in the embodiments of the present disclosure may be an electronic device, or may be a component in an electronic device, such as an integrated circuit or a chip.

The control apparatus for the power supply system according to the embodiments of the present disclosure is capable of implementing each process implemented by the above-described embodiments of the control method for the power supply system. To avoid repetition, detailed descriptions are omitted herein.

In an embodiment of the present disclosure, a power supply system is further provided.

As illustrated in FIG. 2, the power supply system may include the first power supply device 210, the second power supply device 220, and the above-described control apparatus. The control apparatus is connected to the contactor that is connected to the first power supply device 210 and the second power supply device 220.

The first power supply device 210 is connected to the first energy storage apparatus 510. The first power supply device 210 and the second power supply device 220 are connected to the coupling point.

It should be noted that, the first power supply device 210 and the second power supply device 220 are two types of power supply devices.

The power supply device is configured to achieve power conversion between a direct-current voltage and an alternative-current voltage. The power supply device may be an inverter, a converter, etc.

It should be understood that, the power supply system may include a plurality of first power supply devices 210, with the power supply system supporting the plurality of first power supply devices 210 operating in parallel. The power supply system may also include a plurality of second power supply devices 220, with the power supply system supporting the plurality of second power supply devices 220 operating in parallel.

The first power supply device 210 is connected to the first energy storage apparatus 510. The first power supply device 210 can absorb the excess electric energy through the coupling point. The first power supply device 210 can also store electricity from the power grid to the first energy storage apparatus 510.

The second power supply device 220 may be connected to the power generation apparatus 520. The second power supply device 220 may also be connected to the second energy storage apparatus. The second power supply device 220 may also be connected to both the power generation apparatus 520 and the second energy storage apparatus. For example, the second power supply device 220 may be a photovoltaic inverter, an energy storage inverter, or a photovoltaic-storage inverter.

It should be noted that, no communication connection is established between the first power supply device 210 and the second power supply device 220.

The communication is established between the control apparatus and the first power supply device 210, and the first power supply device 210 a controllable power supply device. No communication is established between the control apparatus and the second power supply device 220, the second power supply device 220 is an uncontrollable power supply device.

It should be understood that, the second power supply device 220 is configured to operate based on a control policy provided at the second power supply device 220. The control method according to the embodiments of the present disclosure may not directly control actions of the second power supply device 220 (that is, the second power supply device 220 is uncontrollable). The second power supply device 220 may monitor the voltage or the frequency of the coupling point in real time, to adjust its own output state and achieve its own safety protection function.

In actual implementation, the first power supply device 210 is provided with a first controller 310. The first controller 310 is configured to control the operating state of the first power supply device 210 based on an input signal. The second power supply device 220 is correspondingly provided with a second controller 320. The second controller 320 is configured to control an operating state of the second power supply device 220 based on an input signal.

According to an embodiment, the control apparatus for the power supply system is a master controller 400.

As illustrated in FIG. 2, by monitoring the parameters such as the current SOC, the voltage of the coupling point, and the frequency of the coupling point, and adopting the primary control policy and the secondary control policy, the energy management of the multiple power supply devices in the power supply system is achieved.

The primary control policy can achieve maximum utilization of the generated power. The master controller 400 is configured to monitor the voltage $U_{PCC}$ of the coupling point or the frequency $F_{Ref}$ of the coupling point; output power reference values $P_{INV1\_Ref}$, $P_{INV2\_Ref} \cdots P_{INVn\_Ref}$ of the controllable first power supply device 210 by using the target coupling point voltage $U_{Ref}$ or the target coupling point frequency $F_{Ref}$ as reference; and distribute the power reference values to each first power supply device 210. In this way, respective power reference values $P_{INV1\_Ref}$, $P_{INV2\_Ref} \cdots P_{INVn\_Ref}$ are obtained to perform the closed-loop control.

When the second power supply device 220 outputs excess power to the coupling point on the basis of meeting power requirements of the load 600, based on the law of conservation of energy, the voltage of the coupling point rises accordingly. Through the above-described closed-loop control, the first power supply device 210 receives a power command that is increased accordingly and increases power absorption, in such a manner that transfer of the generating power of the second power supply device 220 is achieved, enabling the second power supply device 220 to participate in the energy dispatch of the power supply system in an orderly manner.

When the first power supply device 210 reaches its maximum absorption capacity, that is, when the SOC of the first energy storage apparatus 510 of the first power supply device 210 is excessively high or the charging power reaches the threshold, the excess power of the second power supply device 220 cannot be effectively absorbed. In this case, the secondary control policy is executed.

In addition, when the SOC of the first energy storage apparatus 510 is excessively low or the discharging power reaches the threshold, to prevent the second power supply device 220 from causing the abnormal voltage or frequency of the system, or further reducing of the SOC, the secondary control policy may also be executed. By adjusting the frequency or controlling the connection or disconnection of the contactor, the output of the second power supply device 220 is coordinated, triggering the second power supply device 220 to actively perform voltage abnormality protection or frequency abnormality protection.

With the power supply system according to the embodiments of the present disclosure, by performing the real-time monitoring on the current SOC and the current charging/discharging power, and executing the target control policy in response to the current SOC or the current charging/discharging power exceeding the normal operating range, the energy management of the multiple power supply devices can be achieved without establishing the communication, ensuring the stable operation of the power supply system.

In some embodiments, as illustrated in FIG. 9, the embodiments of the present disclosure also provide an electronic device 900, including a processor 901, a memory 902, and a computer program stored in the memory 902 and executable by the processor 901. The computer program, when executed by the processor 901, implements each process of the above-described embodiments of the control method for the power supply system, and the same technical effects may be achieved. To avoid repetition, detailed descriptions are omitted herein.

It should be noted that, the electronic device in the embodiments of the present disclosure includes a portable electronic device and a stationary electronic device.

In an embodiment of the present disclosure, a non-transitory computer-readable storage medium is further provided. The non-transitory computer-readable storage medium has a computer program stored thereon. The computer program, when executed by a processor, implements each process of the above-described embodiments of the control method for the power supply system, and achieves the same technical effects. To avoid repetition, detailed descriptions are omitted herein.

The processor is a processor in the electronic device described in the above embodiments. A readable storage medium includes a computer-readable storage medium, such as a computer read-only memory ROM, a random access memory RAM, a magnetic disk, or a CD, etc.

In an embodiment of the present disclosure, a computer program product is further provided. The computer program product includes a computer program. The computer program, when executed by a processor, implements the above-described control method for the power supply system.

The processor is the processor in the electronic device described in the above embodiments. The readable storage medium includes the computer-readable storage medium, such as the computer read-only memory ROM, the random access memory RAM, the magnetic disk, or the CD, etc.

In an embodiment of the present disclosure, a chip is further provided. The chip includes a processer and a communication interface coupled to the processor. The processor is configured to execute a program or instructions to implement each process of above-described embodiments of the control method for the power supply system, and achieve the same effects. To avoid repetition, detailed descriptions are omitted herein.

It should be understood that, the chip mentioned in the embodiments of the present disclosure may also be called a system-level chip, a system chip, a chip system, or an on-chip system chip, etc.

It should be noted that terms "comprise", "include" or any other variations thereof are meant to cover non-exclusive including, such that the process, method, goods or apparatus including a series of elements do not only include those elements, but further include other elements that are not explicitly listed, or further include inherent elements of the process, method, goods or apparatus. In a case that there are no more restrictions, an element limited with the statement "comprises a ..." does not exclude the presence of additional identical elements in the process, method, goods or apparatus that includes the said element. In addition, it should be noted that the scope of the methods and apparatus in the embodiments of the present disclosure is not limited to performing functions in the order shown or discussed, and can also include performing functions in a substantially simultaneous manner or in the reverse order according to the functions involved. For example, the described methods can be performed in an order different from that described, and various operations can be added, omitted, or combined. In addition, features described with reference to certain examples can be combined in other examples.

From the above description of the implementations, it will be clear to those skilled in the art that the method in the above embodiments can be implemented with the aid of software and a necessary common hardware platform or can be implemented through hardware. In many cases, the former one is a better implementation. Based on this understanding, all of the technical solutions according to the embodiments of the present disclosure, or the part thereof that contributes to the related art, can be embodied in the form of a computer software product. The computer software product can be stored in a storage medium (such as a ROM/RAM, a disk, and an optical disk) and contain instructions to enable a terminal device (which can be a mobile phone, a computer, a server, a network device, etc.) to perform the method described in each of the embodiments of the present disclosure.

The embodiments of the present disclosure are described above with reference to the accompanying drawings, but the present disclosure is not limited to the above specific implementations, which are merely illustrative, rather than restrictive. Under the motivation of the present disclosure, those skilled in the art can also make many variations without departing from the principles of the present disclosure. These variations are to be encompassed by the protection scope of present disclosure.

Reference throughout this specification to "an embodiment", "some embodiments", "schematic embodiments", "an example", "a specific example", or "some examples" means that a particular feature, structure, material, or characteristic described in connection with the embodiment or example is included in at least one embodiment or example of the present disclosure. In this specification, exemplary descriptions of above terms are not necessarily referring to the same embodiment or example. Further, the particular features, structures, materials, or characteristics can be combined in any suitable manner in one or more embodiments or examples.

Although embodiments of the present disclosure have been illustrated and described, it is conceivable for those skilled in the art that various changes, modifications, replacements, and variations can be made to these embodiments without departing from the principles and spirit of the present disclosure. The scope of the present disclosure shall be defined by the claims as appended and their equivalents.

## Claims

1. A control method for a power supply system, wherein:

   the power supply system comprises a first power supply device and a second power supply device, the first power supply device being connected to a first energy storage apparatus, and the first power supply device and the second power supply device being connected to a coupling point; and
   wherein the control method comprises:

obtaining a current State of Charge, SOC, and current charging/discharging power of the first energy storage apparatus connected to the first power supply device; and executing a target control policy, in response to the current SOC exceeding a target SOC range, or the current charging/-discharging power exceeding a target power range, wherein the executing the target control policy comprises:

controlling a frequency of the first power supply device; or
controlling a contactor connected to the second power supply device to be disconnected, to disconnect the second power supply device from the coupling point;

wherein the executing the target control policy in response to the current SOC exceeding the target SOC range comprises:

determining a frequency adjustment amount based on the current SOC; and adjusting the frequency of the first power supply device based on the frequency adjustment amount, wherein the adjusting the frequency of the first power supply device based on the frequency adjustment amount comprises: raising the frequency of the first power supply device based on the frequency adjustment amount in response to the current SOC being greater than an upper limit of the target SOC range, to cause the second power supply device to automatically operate in a derated mode, wherein the second power supply device is configured to automatically stop operating in response to the frequency of the first power supply device exceeding an over-frequency protection threshold; wherein the adjusting the frequency of the first power supply device based on the frequency adjustment amount further comprises: reducing the frequency of the first power supply device based on the frequency adjustment amount in response to the current SOC being smaller than a lower limit of the target SOC range, to cause the second power supply device to automatically increase output power, wherein the second power supply device is configured to automatically stop operating in response to the frequency of the first power supply device being smaller than an under-frequency protection threshold.

2. The control method for the power supply system according to claim 1, wherein the frequency of the first power supply device is positively correlated to the current SOC.

3. The control method for the power supply system according to claim 1, wherein the executing the target control policy in response to the current SOC exceeding the target SOC range comprises: controlling the contactor connected to the second power supply device to be disconnected, in response to the current SOC being greater than the upper limit of the target SOC range, wherein the second power supply device is connected to a power generation apparatus.

4. The control method for the power supply system according to claim 1, wherein the executing the target control policy in response to the current SOC exceeding the target SOC range comprises: controlling the contactor connected to the second power supply device to be disconnected in response to the current SOC being smaller than the lower limit of the target SOC range, wherein the second power supply device is connected to a second energy storage apparatus.

5. The control method for the power supply system according to claim 1, wherein the executing the target control policy in response to the current charging/discharging power exceeding the target power range comprises: controlling the contactor connected to the second power supply device to be disconnected, when the second power supply device is connected to the contactor and the second power supply device is allowed to be disconnected.

6. The control method for the power supply system according to claim 1, wherein the executing the target control policy in response to the current charging/discharging power exceeding the target power range comprises: controlling the second power supply device to automatically stop operating in response to a voltage or a frequency of the coupling point being abnormal, when the second power supply device is not connected to the contactor, or when the second power supply device is not allowed to be disconnected.

7. The control method for the power supply system according to any one of claims 1 to 6, wherein the method further comprises, prior to executing the target control policy:

obtaining a current coupling point parameter of the coupling point; and

performing power control on the first power supply device by using the current coupling point parameter as a feedback value and a target coupling point parameter as a reference value.

8. A control apparatus for a power supply system, wherein:

the power supply system comprises a first power supply device and a second power supply device, the first power supply device being connected to a first energy storage apparatus, and the first power supply device and the second power supply device being connected to a coupling point; and

wherein the control apparatus comprises:

an obtaining module configured to obtain a current State of Charge, SOC, and current charging/discharging power of the first energy storage apparatus connected to the first power supply device; and

a processing module configured to execute a target control policy in response to the current SOC exceeding a target SOC range or the current charging/discharging power exceeding a target power range, wherein the executing the target control policy comprises:

controlling a frequency of the first power supply device; or

controlling a contactor connected to the second power supply device to be disconnected, to disconnect the second power supply device from the coupling point;

wherein the processing module is configured to execute the target control policy in response to the current SOC exceeding the target SOC range, wherein the processing module being configured to execute the target control policy in response to the current SOC exceeding the target SOC range comprises the processing module being configured to:

determine a frequency adjustment amount based on the current SOC; and adjust the frequency of the first power supply device based on the frequency adjustment amount;

wherein the processing module being configured to adjust the frequency of the first power supply device based on the frequency adjustment amount comprises the processing module being configured to: raise the frequency of the first power supply device based on the frequency adjustment amount in response to the current SOC being greater than an upper limit of the target SOC range, to cause the second power supply device to automatically operate in a derated mode, wherein the second power supply device is configured to automatically stop operating in response to the frequency of the first power supply device exceeding an over-frequency protection threshold;

wherein the processing module being configured to adjust the frequency of the first power supply device based on the frequency adjustment amount further comprises the processing module being configured to: reduce the frequency of the first power supply device based on the frequency adjustment amount in response to the current SOC being smaller than a lower limit of the target SOC range, to cause the second power supply device to automatically increase output power, wherein the second power supply device is configured to automatically stop operating in response to the frequency of the first power supply device being smaller than an under-frequency protection threshold.

9. A power supply system, comprising:

a first power supply device and a second power supply device, wherein the first power supply device is connected to a first energy storage apparatus, and the first power supply device and the second power supply device are connected to a coupling point; and

the control apparatus for the power supply system according to claim 8, wherein the control apparatus is connected to a contactor, the contactor being connected to the first power supply device and the second power supply device.

Obtain a current state of charge and current charging/discharging power of the energy storage apparatus connected to the first power supply device — 110

Execute a target control strategy, in response to the current state of charge exceeding a target state of charge range, or the current charging/discharging power exceeding a target power range — 120

FIG. 1

FIG. 2

Start

Adjust the voltage of the coupling point to $U_{Ref}$, or adjust the frequency of the coupling point to $F_{Ref}$

Whether the voltage or the frequency of the coupling point is abnormal

Yes →

Whether to perform the contactor control

No

No

Yes

Disconnect the contactor

The second power supply device is shut down for protection

Whether the state of charge of the controllable system is close to the threshold

No →

The second power supply device operates normally

Yes

Whether to perform the contactor control

No →

Control the frequency based on *soc*, where $freq = f_0 + f_a(soc)$

Yes

Control connection or disconnection of the contactor based on *soc*, where $S = f_b(soc)$

The second power supply device operates in an over-frequency derated mode, or in an under-frequency power-raising mode, or is shut down for protection

Disconnect the contactor

FIG. 3

18

FIG. 4

FIG. 5

FIG. 6

FIG. 7

FIG. 8

FIG. 9

EP 4 769 866 A1

## EUROPEAN SEARCH REPORT

Application Number

EP 25 22 3110

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | JP 2023 124240 A (DIAMOND&ZEBRA ELECTRIC MFG CO LTD) 6 September 2023 (2023-09-06) * paragraph [0013] * * paragraph [0028] * * paragraph [0053] - paragraph [0056] * * figure 1 * | 1-9 | INV. H02J3/32 H02J3/38 H02J7/34 |
| X | CN 105 244 900 A (XUJI GROUP CO LTD; STATE GRID CORP CHINA ET AL.) 13 January 2016 (2016-01-13) | 1,2,7-9 | |
| Y | * paragraph [0010] - paragraph [0013] * | 3,4,6 | |
| A | * figure 1 * * figure 3 * | 5 | |
| X | WO 2013/118376 A1 (PANASONIC CORP [JP]) 15 August 2013 (2013-08-15) | 1,5,8 | |
| Y | * figure 1 * | 3,4,6 | |
| A | * paragraph [0102] - paragraph [0104] * | 7,9 | |

**TECHNICAL FIELDS SEARCHED (IPC)**

H02J

The present search report has been drawn up for all claims

| Place of search | Date of completion of the search | Examiner |
|---|---|---|
| Munich | 19 May 2026 | Falagan de la Sierra |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

## ANNEX TO THE EUROPEAN SEARCH REPORT
## ON EUROPEAN PATENT APPLICATION NO.

EP 25 22 3110

This annex lists the patent family members relating to the patent documents cited in the above-mentioned European search report.
The members are as contained in the European Patent Office EDP file on
The European Patent Office is in no way liable for these particulars which are merely given for the purpose of information.

19-05-2026

| Patent document cited in search report | | Publication date | Patent family member(s) | | Publication date |
|---|---|---|---|---|---|
| JP 2023124240 | A | 06-09-2023 | JP | 7796554 B2 | 09-01-2026 |
| | | | JP | 2023124240 A | 06-09-2023 |
| CN 105244900 | A | 13-01-2016 | NONE | | |
| WO 2013118376 | A1 | 15-08-2013 | JP | WO2013118376 A1 | 11-05-2015 |
| | | | WO | 2013118376 A1 | 15-08-2013 |

EPO FORM P0459

For more details about this annex : see Official Journal of the European Patent Office, No. 12/82